# EUROPEAN PATENT APPLICATION

(11) **EP 1 489 545 A1**
(43) Date of publication of application: **22.12.2004**
(21) Application number: 04102712.9
(22) Date of filing: 15.06.2004
(51) Int. Cl.: G06F 17/60, A01F 25/00, B65D 88/00, B01F 15/02

(54) **Method and system for management of the processing of agricultural products**

(30) Priority: 20.06.2003 US 480177 P; 19.03.2004 US 805660
(71) Applicant: DEERE & COMPANY, Moline, Illinois 61265-8098 (US)
(72) Inventor: Pape, William Robert, 87551, Los Ojos (US); Powell, John Carl, 30040, Cumming (US); Meyer, Michelle Lee, 30040, Cumming (US); Sweat, Michael Tom, 64154, Kansas City (US); Nolan II, John O'Leary, 10011, New York (US); Niswonger, Richard C., 85326, Buckeye (US)
(74) Representative: Holst, Sönke, Dr.

(57) **Abstract**

A raw material is stored in a storage container. The stored raw material is physically processed in the storage container to obtain a processed material based on the raw material. Link data is recorded for associating the raw material with the processed material across any transformation between the raw material and the processed material. A graphical user interface is provided to facilitate at least one of entry, storage, retrieval, and data processing of the recorded link data for management of the storage containers.

## Description

### Field of the Invention

This invention relates to a method and system for computer-assisted management of the processing of agricultural products and derivatives thereof.

### Background of the Invention

Agricultural products may include grains, oilseeds, and other crops. In the past, agricultural products have often been regarded as commodities. For example, corn from different suppliers was typically mixed at a local grain elevator regardless of a the genetic content, nutritional value or variety of the particular corn.

Technological advances in plant science and testing make it possible to introduce desirable traits into agricultural products through genetic modification, environmental influence or otherwise. Differentiated traits may include enhanced nutrition, special protein profiles, and pharmaceutical properties of agricultural products, among other characteristics. Certain processors and consumers of agricultural products may desire agricultural products with certain characteristics or traits to produce various end products based on the agricultural product.

Agricultural products may be stored at grain elevators, farms, storage facilities at processors, and other storage infrastructure. Regardless of where the agricultural product is stored, a need exists to track agricultural product to facilitate the flow of information from the grower to the processor and to any recipient of the agricultural product or a derivative thereof from the processor. Accordingly, the need exists for an information management system that supports storage, processing, and transactions associated with agricultural products and derivatives thereof.

### Summary of the Invention

A raw material is stored in a storage container. The stored raw material in the storage container is physically processed to obtain a processed material based on the raw material. Link data is recorded for associating the raw material with the processed material across any transformation (e.g., physical or chemical) between the raw material and the processed material. A graphical user interface is provided to facilitate at least one of entry, storage, retrieval, and data processing of the recorded link data for management of at least one of the raw material, the processing of the raw material, the processed material, and the storage containers.

### Brief Description of the Drawings

FIG. 1 is a block diagram of a system for managing an agricultural product or a derivative thereof.

FIG. 2 is a flow chart for a method for managing an agricultural product or a derivative thereof.

FIG. 3 and FIG. 4 represent setup screens for defining characteristics of a storage container.

FIG. 5 and FIG. 6 represent setup screens for defining attributes of an agricultural product.

FIG. 7 represents a setup screen for defining a mixture of products as an agricultural product.

FIG. 8 represents a setup screen for defining an ingredient list for an agricultural product.

FIG. 9 represents a setup screen for defining a graphical bin representation of storage containers associated with a defined location.

FIG. 10 represents a screen for receiving an agricultural product and populating attribute values based on the identity of the agricultural product.

FIG. 11 represents a screen for transferring an agricultural product from a delivery into a storage container.

FIG. 12 represents a screen for tracking the inventory of an agricultural product in various storage containers.

FIG. 13A is a graphical bin representation that reflects the state of various storage containers.

FIG. 13B is a block diagram of an information gathering system for gathering status information associated with various storage containers.

FIG. 14 is a screen that provides a description of attributes associated with a corresponding agricultural product.

FIG. 15 is a screen that provides a history of the operations associated with a storage container.

FIG. 16 is a screen that shows a lab analysis entry for entering test results associated with an agricultural product.

FIG. 17 is a screen that shows packaging of the inventory of various agricultural products.

FIG. 18 represents a storage report that provides a storage summary of various storage containers.

FIG. 19 represents an event report that provides an event summary of various events.

FIG. 20 represents a supplier report that provides a supplier summary of various events.

FIG. 21 is a screen that shows transferring of an agricultural product from a storage container.

FIG. 22 illustrates transferring of an agricultural product from one source storage container to one or more destination storage containers.

FIG. 23 illustrates mixing of an agricultural product from two or more source storage containers to a destination storage container.

FIG. 24 illustrates data tracking for receiving, blending, mixing, transferring of agricultural products or other operations.

FIG. 25 is a graphical bin representation that allows a user to blend, mix or transfer between storage containers.

FIG. 26 is a blending calculator that determines the relative quantities, weights, or volumes of two or more agricultural products to be blended.

FIG. 27 illustrates blending two or more precursor agricultural products together to achieve a target trait value of a derivative agricultural product.

FIG. 28 illustrates a milling transfer in which an agricultural product changes state from a raw material to a milled material.

FIG. 29 through FIG. 32 show various screens for tracking treatments of an agricultural product.

### Description of the Preferred Embodiment

An agricultural product may have various states. The states may include a raw material and a processed material. A processed material may comprise an intermediate product or a final product. Between each state, the agricultural product may undergo a transformation. A transformation refers to physical, chemical or other changes in the agricultural product. The agricultural product is associated with an agricultural product identifier. The agricultural product identifier may be associated with any state of the product and may be assigned to the agricultural product when the agricultural product is a raw material. Link data 132 provides a link between the transformation from one state to another of the agricultural product. Together, the agricultural product identifier and the associated link data 132 provide the identity of the agricultural product and its latest state. The state of the agricultural product may change over time as the agricultural product moves through storage, processing or manufacturing.

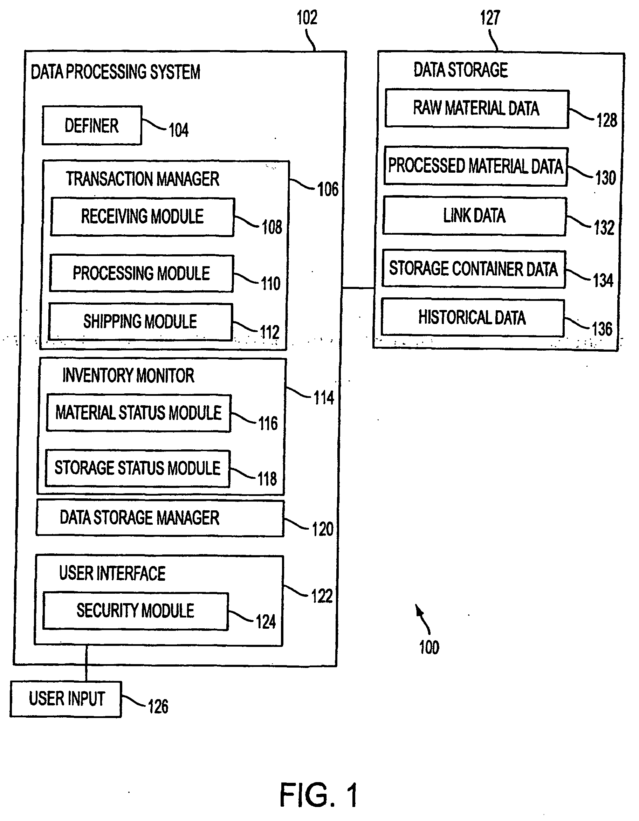

FIG. 1 shows a block diagram of an information processing system 100 for managing an agricultural product. The information processing system 100 comprises a data processing system 102 coupled to a data storage 127 device. The data processing system 102 may support a user input device 126, such as a graphical user interface, a keyboard, a display, a pointing device (e.g., a mouse) or any combination of the foregoing items. The data processing system 102 comprises a definer 104, a transaction manager 106, an inventory monitor 114, a data storage manage 120, and a user interface 124.

The definer 104 may be used to configure the transaction manager 106 and the inventory monitor 114. The transaction manager 106 includes a receiving module 108, a processing module 110, and a shipping module 112. The inventory monitor 114 includes a material status module 116 and the storage status module 118. The data storage 127 device stores one or more of the following: raw material data 128, processor material data, link data 132, storage container data 134, and historical data 136.

The definer 104 allows a user to define a storage site or at least one storage container for storing any of the following: raw material, processed material, a derivative of the raw material or processed material, and other material. The user may define the storage site or at least one storage container as a graphical representation, a textual representation or combination of both.

The transaction manager 106 comprises a receiving module 108, a processing module 110, and a shipping module 112. The transaction manager 106 stores information on one or more transactions concerning the agricultural product. For example, the transaction manager 106 may store link data 132 that links raw material data 128 to processed material data 130. The raw material data 128 is associated with corresponding raw material.

The processed material data 130 is associated with corresponding processed material data 130. The processing module 110 supports processing of a raw material, a processed material or both. The processing module 110 may keep records of one or more of the following processes associated with particular material: processing, blending, mixing, fumigating, treating, heating, cooling, drying, crushing, milling, reacting, preserving, cooking, distilling, fermenting, and adding moisture.

The inventory monitor 114 aggregates the status of one or more storage containers, agricultural products stored therein, or both, to provide an overall status of operation to a user. The inventory monitor 114 may include a material status module 116 and a storage status module 118. The material status module 116 monitors the status, state, and attributes of agricultural products, materials, and material attributes. For example, the material status module 116 stores the respective weights or volumes of corresponding agricultural products for a particular location, facility or entity. The storage status module 118 monitors the status, states, and attributes of various storage containers. For example, the storage status module 118 stores the remaining storage capacity or available storage capacity of corresponding storage containers.

The user interface 122 may support a graphical user interface for a user. A graphical user interface may include a display, a keyboard, and pointing device (e.g., a mouse). The graphical user interface may support entering data, manning controls, and outputting data for a user. A security module 124 may limit access of certain data entry control and data output to certain corresponding authorized users.

The data storage manager 120 supports data entry, storage, and retrieval of data associated with the data storage device 127.

The data storage device 127 stores one or more of the following types of data: raw material data 128, processed material data 130, link data 132, storage container data 134, and historical data 136.

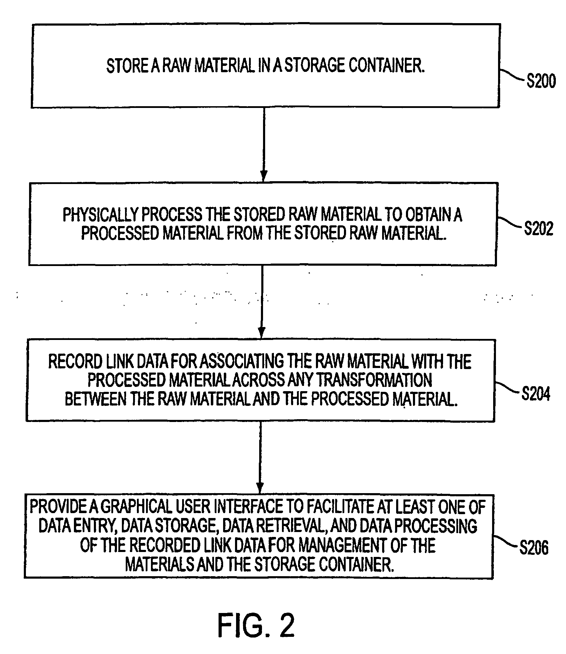

FIG. 2 illustrates a method for managing storage containers for storing materials. The method of FIG. 2 begins in step S200.

In step S200, a data processing system 102 or a data storage device 127 records the storage of a raw material in a storage container.

In step S202, the stored raw material is physically processed to obtain a processed material from the stored raw material. Step S202 may involve removing, transferring or combining of the stored raw material with another material. Physical processing may be conducted for the stored raw material in the storage container or elsewhere. The physical processed may include any application of heat, pressure, cooling, milling, chemical treatment, blending, mixing, refining or other processing that transforms a raw material into a processed material.

In step S204, a data processing system 102 records link data 132 for associating the raw material with the processed material across any transformation between the raw material and the processed material. For example, the raw material may be assigned an agricultural product identifier, and link data may be associated with the assigned agricultural product for one or more transformations that apply to the agricultural products. The agricultural product identifier and the associated link data provide an identity of the processed material.

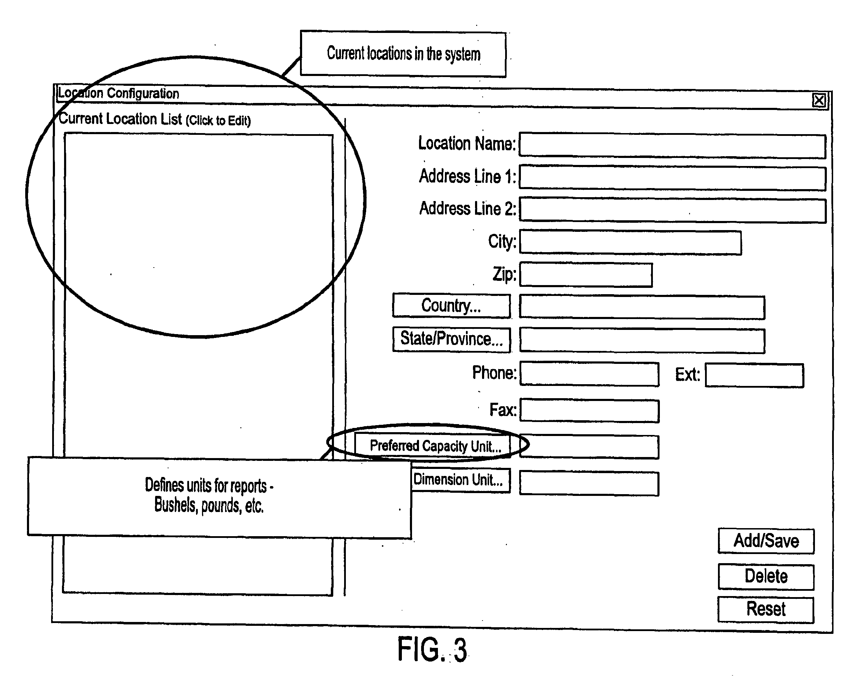

In step S206, the data processing system 102 provides a graphical user interface to facilitate at least one of data entry, data storage, data retrieval, and data processing of the recorded link data 132 for management of the materials and the storage container. For example, the user may determine an inventory status for ordering new materials, scheduling processing of raw materials, establishing processes for obtaining desired traits of processed materials, scheduling delivery of processed materials or engaging in other activities. FIG. 3 through FIG. 32, inclusive, illustrate various alternate and cumulative possibilities for executing step S206 of FIG. 2.

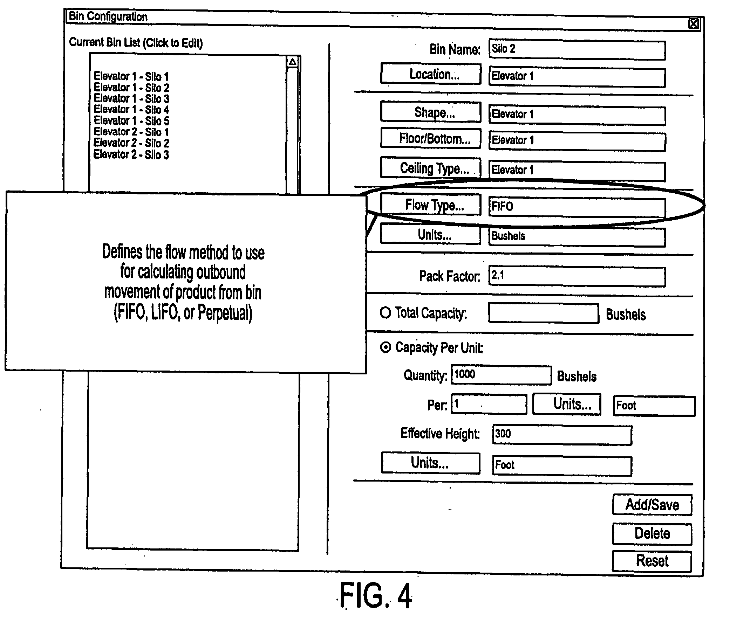

FIG. 3 and FIG. 4 represent setup screens for defining characteristics of a storage container. The definer 104 may support the screens of FIG. 3 and FIG. 4. In FIG. 3, a user may enter one or more locations associated with corresponding storage containers. For example, each location may be associated with one or more storage containers. The location may be defined in terms of a location name, address, and preferred capacity unit and dimensional unit for the reports generated by the management system. In FIG. 4, a user may define a storage container, which may be referred to as a bin. The storage container may be associated with a location, shape, floor, ceiling type, flow type, pack factor, and a storage capacity associated with corresponding storage containers (e.g., bins). For example, the flow type may be defined as first-in, first out (FIFO), last-in, last-out (LIFO) or perpetual. The storage capacity of a corresponding storage container may be defined by total capacity or by capacity per unit (e.g., 1000 bushels per foot). If the capacity per unit is used, one or more physical dimensions of the storage container are required to determine the storage capacity of the corresponding storage container.

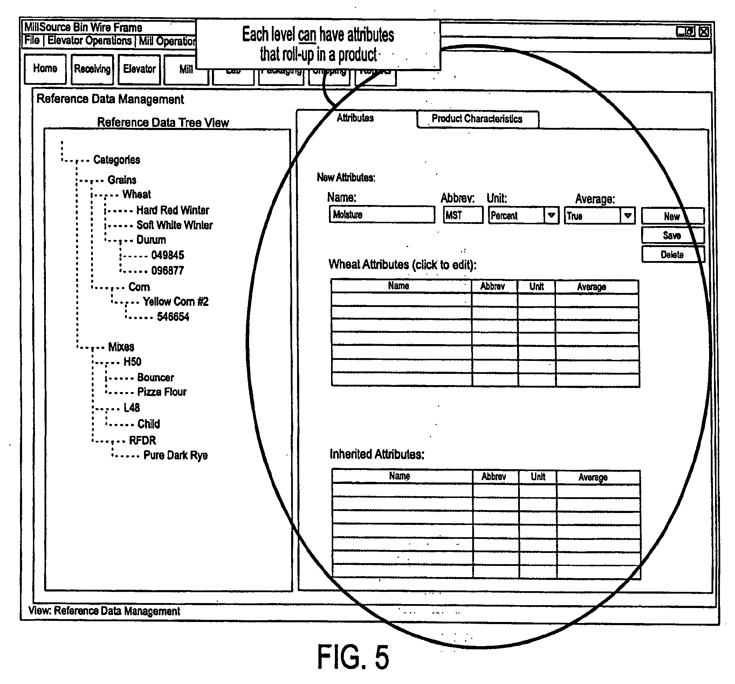

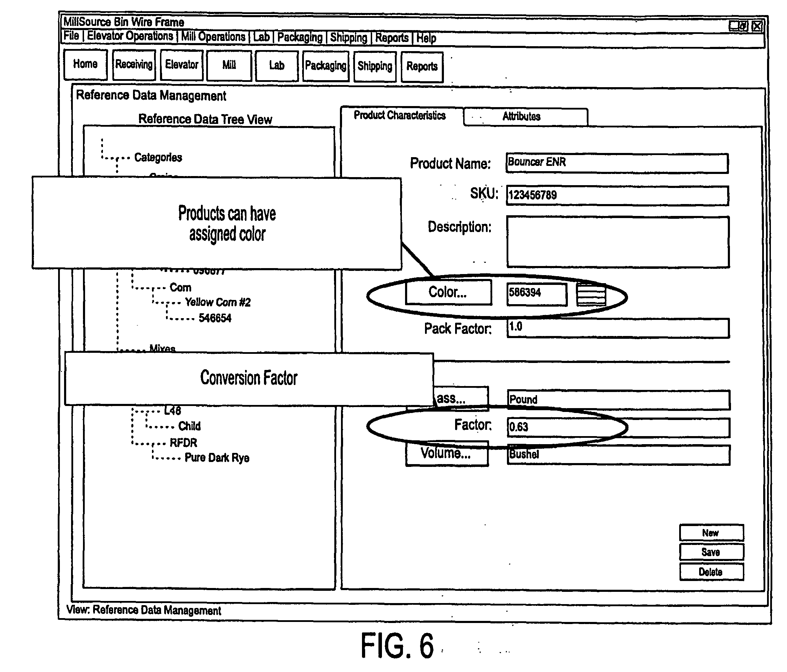

FIG. 5 and FIG. 6 represent setup screens for defining attributes of an agricultural product. The definer 104 may support the screens of FIG. 5 and FIG. 6. In FIG. 5, a user may enter one or more attributes associated with a corresponding agricultural product identifier. In one example, the attributes may be defined by inherited attributes from components of the agricultural product. The components of an agricultural product may represent one or more of the following: a raw material, a blend of raw material, a mixture of raw materials, an intermediate product, and a precursor to the agricultural product. In one illustrative example, an agricultural product may be defined in terms of a product category, a commodity classification, a product classification, and a variety. Although other definitions of the agricultural product fall within the scope of the invention, the product category may represent wheat, grain or an oilseed; the commodity may represent durum, soybeans or corn; the classification may represent a description of one or more attributes of the product, and the variety is a defined variety of the commodity. The commodity may be based upon governmental standards, such as those established by the U.S. Department of Agriculture. The commodity may also be defined in accordance with board of trade definitions for trading commodities on an exchange. The variety may be described by a common name, a scientific name or a name representative of genetic traits of the agricultural product falling under a particular commodity.

The category, classification, commodity, and variety may be for a hierarchy that describes an agricultural product. The variety inherits all of the characteristics of the class, commodity, and product category to which the variety belongs. The class inherits the characteristics of the commodity and product category to which the class belongs. The commodity inherits the characteristics of the product category to which the commodity belongs.

In FIG. 6, a color may be assigned to the agricultural product and a conversion factor may be adjusted to convert between weight and volume for the particular agricultural product. For example, the conversion factor may be used to convert from pounds to bushels. The agricultural product may be assigned a product name, a Stock Keeping Unit (SKU), a description, and a color. The color may provide a more detailed tracking unit than an SKU. A color may be assigned to each lot or discrete unit of production, for example.

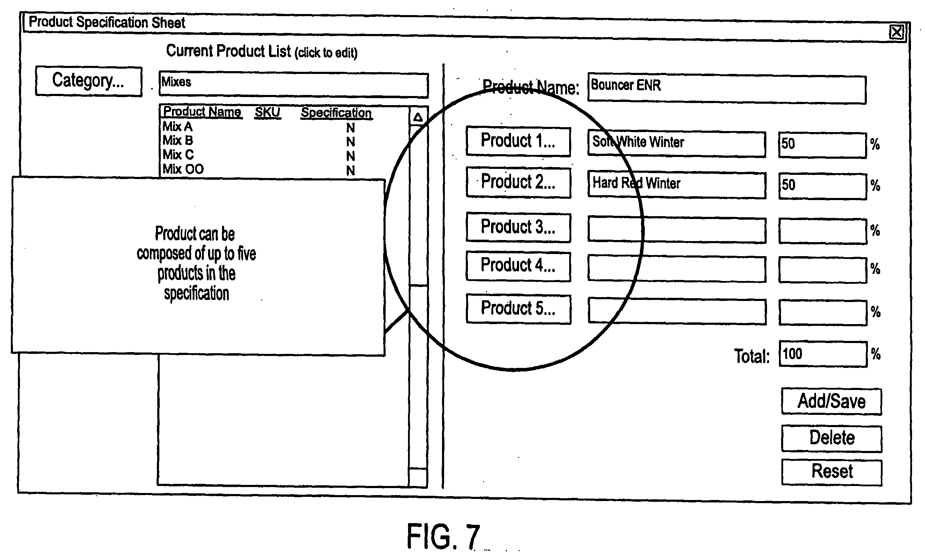

FIG. 7 represents a setup screen for defining a mixture of products as an agricultural product. The definer 104 may support the screen of FIG. 7. An agricultural product may be composed of multiple constituent products (e.g., a raw material). As shown in the illustrative example of FIG. 7, the agricultural product called Bouncer ENR is composed 50% of Soft White Winter wheat and 50% of Hard Red Winter wheat. The entry of the agricultural product under the product name may be used to automatically populate the mix screen of FIG. 7 with its constituent products or components. An agricultural product having a particular name or trade designation may have corresponding known traceable components for consistency.

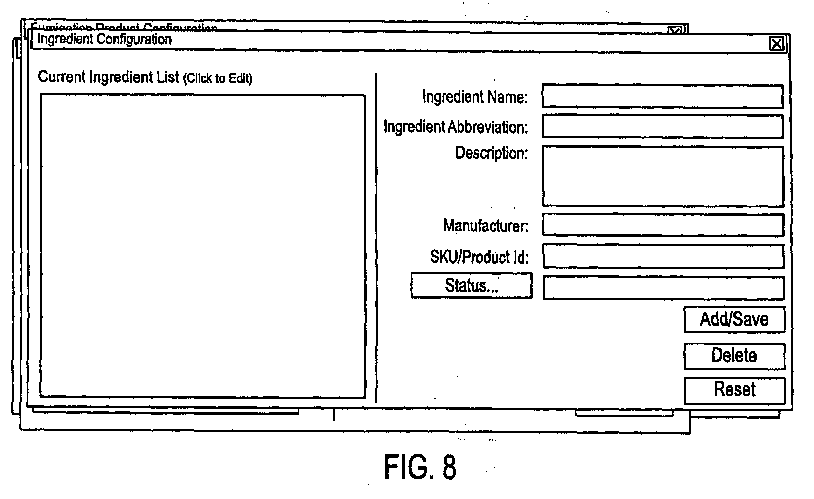

FIG. 8 represents a setup screen for defining an ingredient list for an agricultural product. The definer 104 may support the screen of FIG. 8. The current ingredient list may be used to create an agricultural product (e.g., processed material). Each ingredient on the ingredient list may be associated with a unique product identifier, such as a Stock Keeping Unit (SKU). The SKU may be used to track the ingredients for inventory purposes. Further, each ingredient may be associated with an ingredient name, an ingredient abbreviation, a description, a manufacturer, and a status. The user may be given controls or buttons to manipulate the ingredient list.

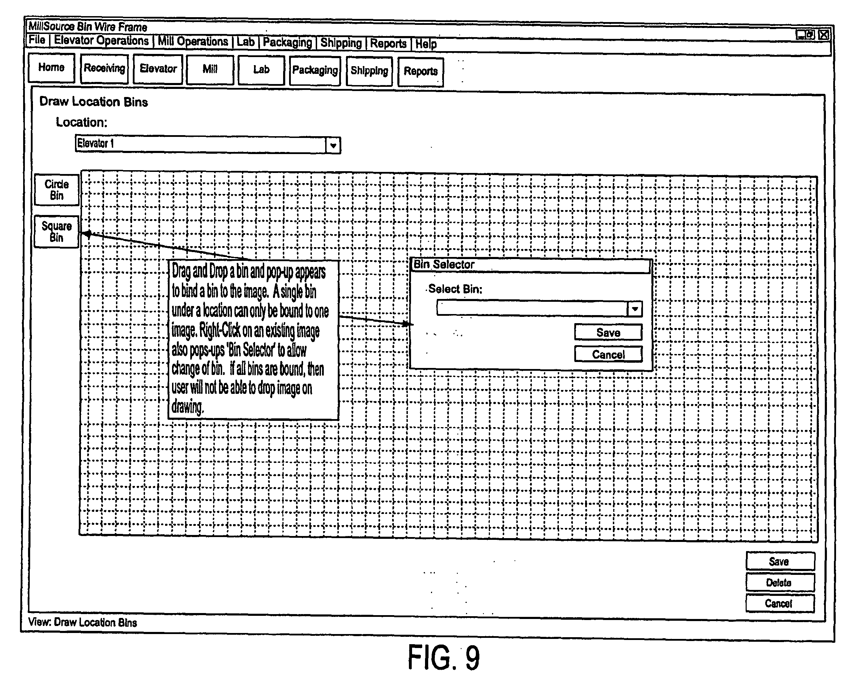

FIG. 9 represents a setup screen for defining a graphical bin representation of storage containers. A set of storage containers may be associated with a corresponding location. The definer 104 may support the screen of FIG. 9. The setup screen allows a user to draw or otherwise establish a graphical bin representation of a set of storage containers associated with a location. For example, a storage container shape may be selected as a circular bin, a square bin, a rectangular bin, a conical bin or another available shape. A user can assign a storage identifier to a corresponding unit. Each bin representation may represent a storage location or facility location.

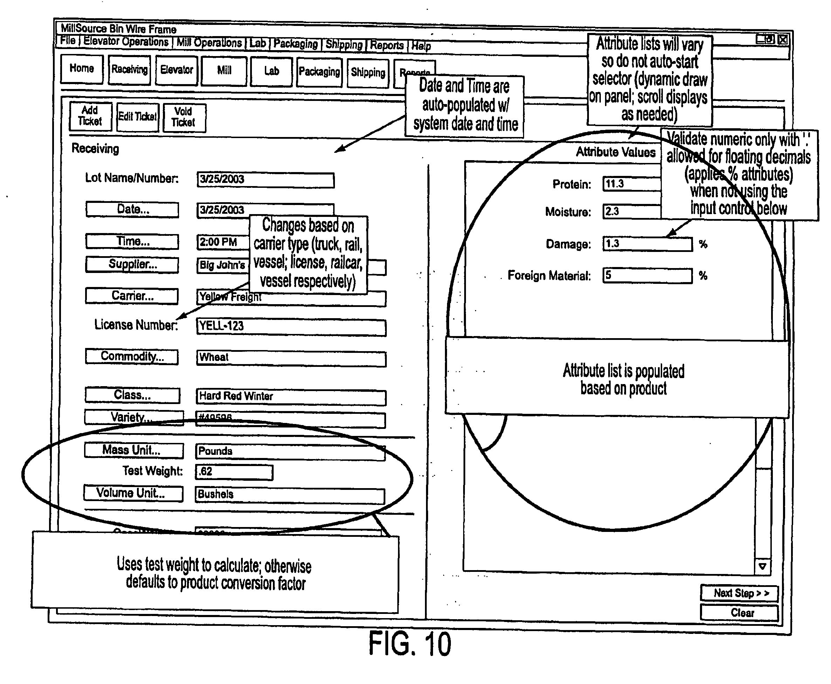

FIG. 10 represents a screen for receiving an agricultural product and populating attribute values based on the identity of the agricultural product. The inventory manager may use the screen of FIG. 10 to support the receiving and tracking of an agricultural product from a third party, such as a supplier. The date and time may be populated with the system date and time provided by the operating system. The carrier may include a corresponding carrier license number that is linked to the carrier field. The received agricultural product may be described in terms of one or more of the following: the commodity, class, variety, volume, weight, and attribute values. The attribute values may include protein, moisture, damage, and foreign material. In one example, protein, moisture content, damage, and foreign material are expressed as a percentage of weight of the received agricultural products. In another example, protein, moisture, damage, and foreign material are expressed as a percentage of volume of the received agricultural product. The attribute list may be populated based on the agricultural product identifier.

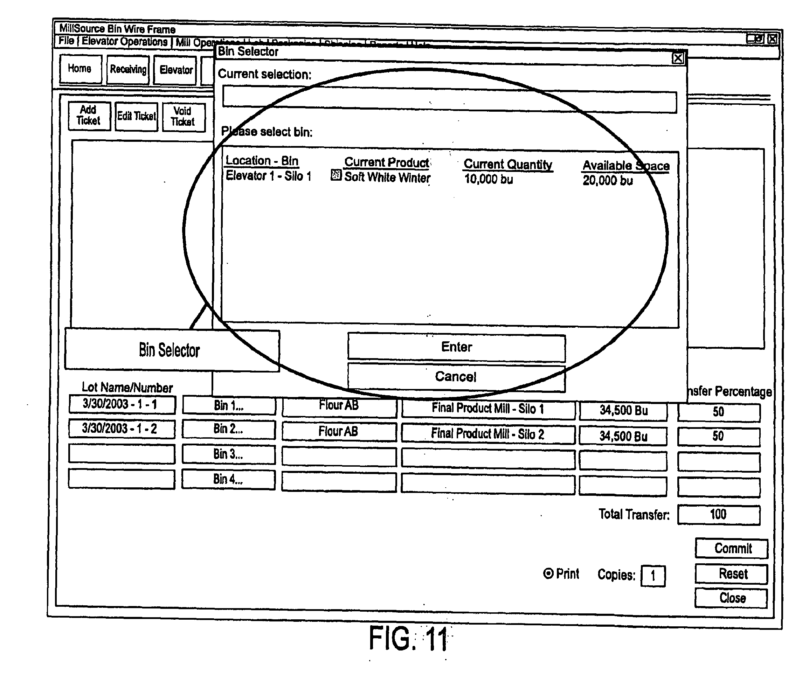

FIG. 11 represents a screen for transferring an agricultural product (e.g., raw material) from a receipt or delivery into a storage container. For example, the received agricultural product may be received at a processor or a storage facility. In FIG. 11, the user selects a storage container for loading or accepting the received agricultural product. Here, the storage container identifier is "Elevator 1- Silo 1", the current received product is Soft White Winter wheat and the received quantity is 10,000 bushels, and 20,000 bushels of space are available for storage in "Elevator 1-Silo 1". Accordingly, the user is able to allocate the received agricultural product to one or more storage containers (e.g., bins) in accordance with a predetermined plan or user preference.

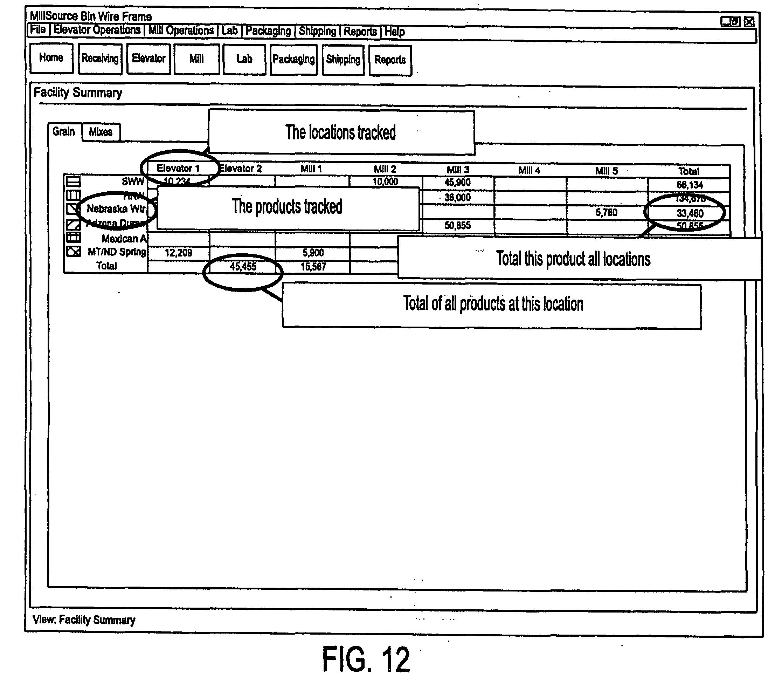

FIG. 12 represents a screen for tracking the inventory of an agricultural product at various locations. Although the locations include Elevator 1, Elevator 2, Mill 1, Mill 2, Mill 3, Mill 4, and Mill 5, any locations of storage containers may be used in practice and fall within the scope of the invention. Although the agricultural product identifiers include Soft White Winter wheat, Hard wheat, Nebraska Winter wheat, Arizona durum, Mexican A wheat and Montana/North Dakota Spring wheat as illustrative examples, other agricultural product identifiers are possible. Each location may have a corresponding set of storage containers and an aggregate location storage capacity. If a user manages multiple locations or facilities, agricultural products may be routed or rerouted to one or more processing facilities to keep efficient control of processes. Inventory may be managed readily to keep desired levels on hand at various locations to minimize storage costs and other economic consequences of holding excessive inventory.

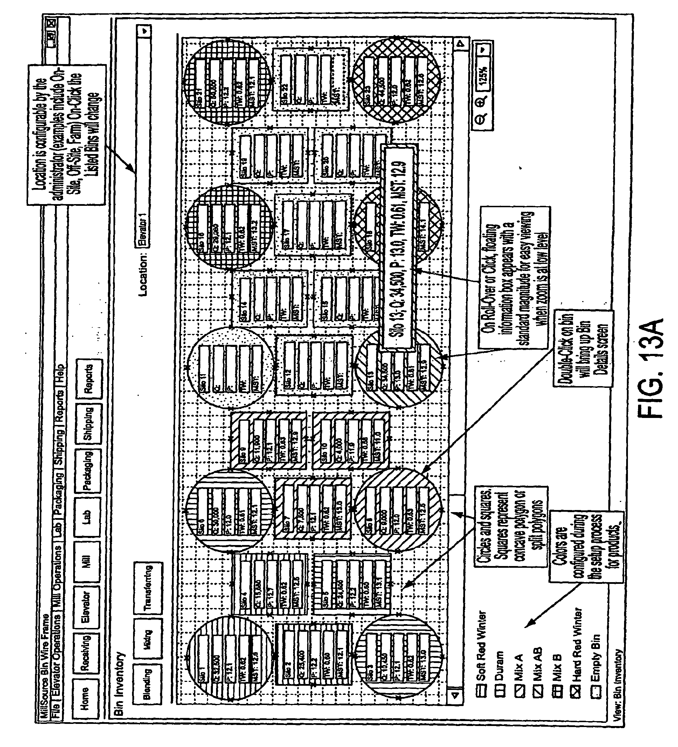

FIG. 13A is a graphical bin representation that reflects the state of various storage containers. Each storage container may be associated with a different color or visual representation that is indicative of the contents of the agricultural product within the storage identifier or the last contents within the storage identifier. As illustrated in the example, FIG. 13A includes a unique visual representation or contents indicator for storage containers that varies based on the contents of the corresponding storage container. Each storage container may contain one or more of the agricultural products: Soft Red Winter wheat, Durum wheat, Mix A, Mix AB, Mix B, Hard Red Winter wheat, and nothing. As illustrated, the storage container identifiers include Silo 1 through Silo 23, at a location designated Elevator 1. The storage container type may be indicated by the shape (e.g., square or circular) of the storage container of FIG. 13A. Each storage container may be associated with a storage container identifier, a contents indicator, a quantity (Q), a percent protein (P), a total weight (TW), and a moisture content (MST). Such information may be gathered manually from a user inspecting gauges associated with a corresponding container or automatically from electronic gauges and monitors that are associated with each storage container.

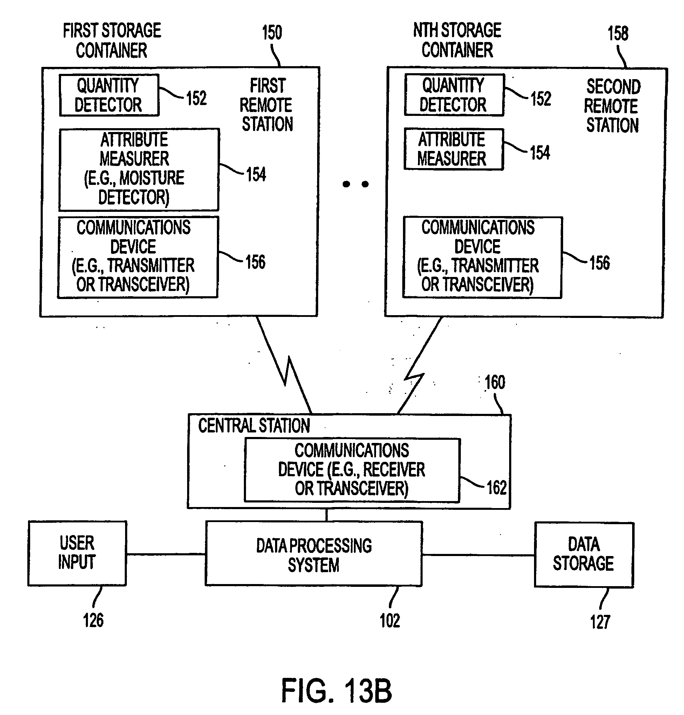

FIG. 13B illustrates an automated information gathering system in which information on storage containers and their contents (e.g., agricultural products) may be gathered automatically and reported to a data processing system 102 via remote stations (150, 158) and a central station 160. Like reference numbers in FIG. 1 and FIG. 13B indicate like elements.

FIG. 13B shows a first remote station 150 up to an Nth remote station 158, where N equals any positive integer greater than or equal to two. The first remote station 150 is associated with a first storage container and the Nth remote station 158 is associated with an Nth storage container. Any intervening remote stations, indicated by the dots, between the first remote station 150 and the Nth remote station 158 are associated with corresponding storage containers. Each remote station (150, 158) may communicate with a central station 160 via an electromagnetic (e.g., radio frequency) signal. In turn, the central station 160 may be coupled to a data processing system 102.

Each remote station (150, 158) comprises a quantity detector 152, an attribute measurer 154, and a communications device 156. The quantity detector 152 detects a quantity (e.g., mass, weight or volume) of the agricultural product stored or present in the corresponding storage container. The quantity detector 152 may represent an electronic gauge, a strain gauge, an electromechanical device, a combination of a piezoelectric sensor and an electronic circuit, an electronic monitor or another measurement device that is associated with a corresponding storage container.

The attribute measurer 154 detects or measures the presence of an attribute, the absence of an attribute or a level of an attribute of the agricultural product stored or present in the storage container. The attribute measurer 154 may represent an electronic gauge, a capacitance-type moisture sensor, an electromechanical device, an electronic monitor or another measurement device that is associated with a corresponding storage container. The attribute measure collects or measures one or more of the following types of data on an attribute: attribute data, measurement data, test data, monitor data, and alarm data. In one example, the attribute measurer 154 may measure the moisture content percent by weight or volume of the agricultural product or whether the moisture content is within an acceptable range. In another example, the attribute measurer 154 may measure the percent damage, percent foreign matter or percent protein content of the agricultural product by weight or volume. The attribute measurer 154 and the quantity detector 152 may report back to a central station 160 via a communications device 156 on a regular basis, after a material change in a measurement or upon polling by the central station 160, for example. The communications device 156 associated with a remote station (150 or 158) may comprise a transmitter or a transceiver, whereas the communications device 162 associated with the central station 160 may comprise a receiver or a transceiver. The communications devices (156, 162) may collectively represent a point-to-multipoint communications system, for example. The central station 160 may be coupled to the data processing system 102 for conveying gathered attribute data, measurement data, test data, monitor data, and alarm data from the remote stations (150, 158) to a user.

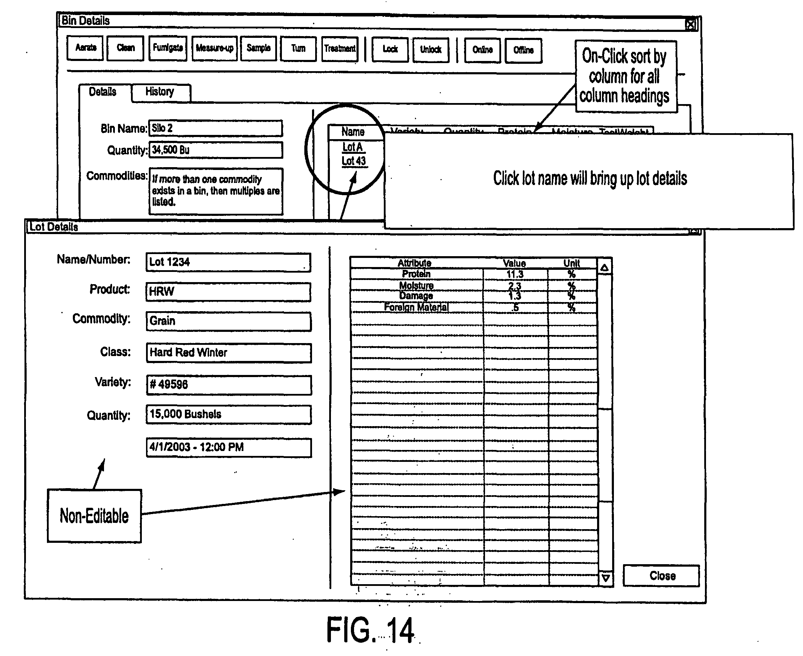

FIG. 14 is a screen that provides a description of attributes associated with a corresponding agricultural product. In one embodiment, a user uses a pointing device, a switch, a keyboard or any combination thereof to select a particular storage container. Upon selection of the particular storage container and entering an appropriate command (e.g., a click), the user is taken to the detailed description of the contents (e.g., the agricultural product) of particular storage container of FIG. 14. The detailed description includes one or more of the following: attribute identifiers, attribute values, protein content, moisture content, damage, foreign material, lot identifier, product abbreviation, commodity, classification, variety, quantity, and receipt date.

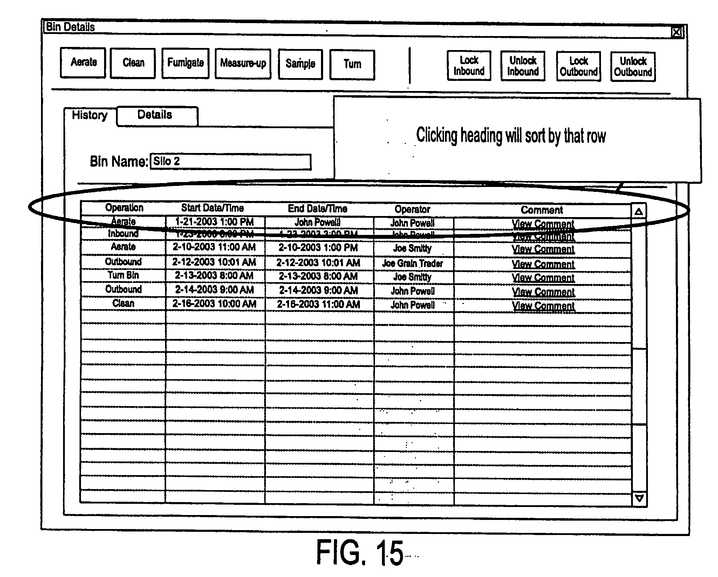

FIG. 15 is a screen that provides a history of the operations associated with a particular storage container. Here, the particular storage container represents Silo 2 and the treatment history of Silo 2 is set forth in a defined format. Although the defined format represents a tabular format if FIG. 15, in an alternate embodiment any other suitable format for storage or presentation of the data may be used. The tabular format may include columns and rows that convey one or more of the following information: operation, start time, start date, end time, end date, operator identifier, and comments. The operations may include any of the following: aerate the particular storage container, accept inbound agricultural product into the particular storage container, send outbound agricultural product from the particular storage container, rotate the particular storage container, and clean the particular storage container.

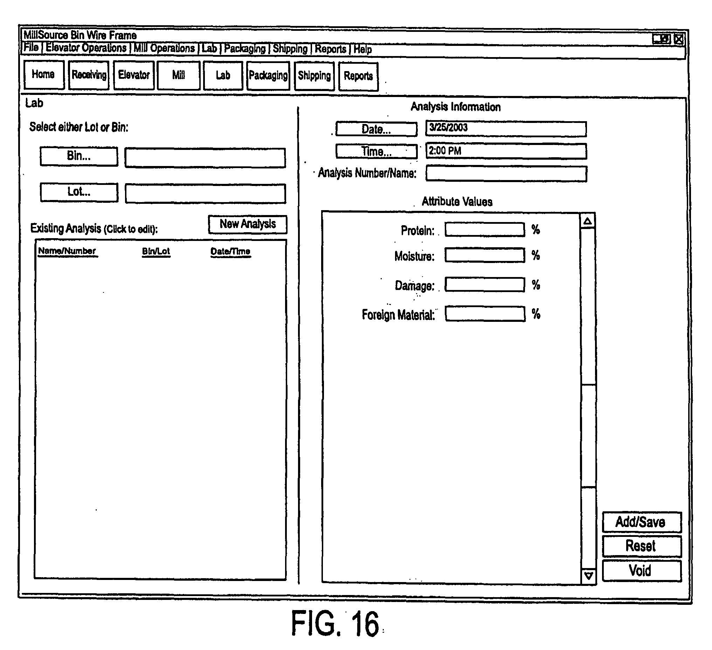

FIG. 16 is a screen that shows a lab analysis entry for entering test results associated with an agricultural product. The analysis is conducted upon the contents (e.g., an agricultural product) of a particular storage container (e.g., a bin or a lot). The analysis information may include any of the following: test date, test time, analysis identifier (e.g., analysis number/name), attribute value, protein percent content, moisture percent, damage percent, and foreign material percent. Further, the lab analysis may be associated with provisions for storing historical lab test results, which may be referred to as existing analysis. The historical lab tests may be identified by analysis identifier (e.g., name/number), bin or lot identifier, and/or test date, for example.

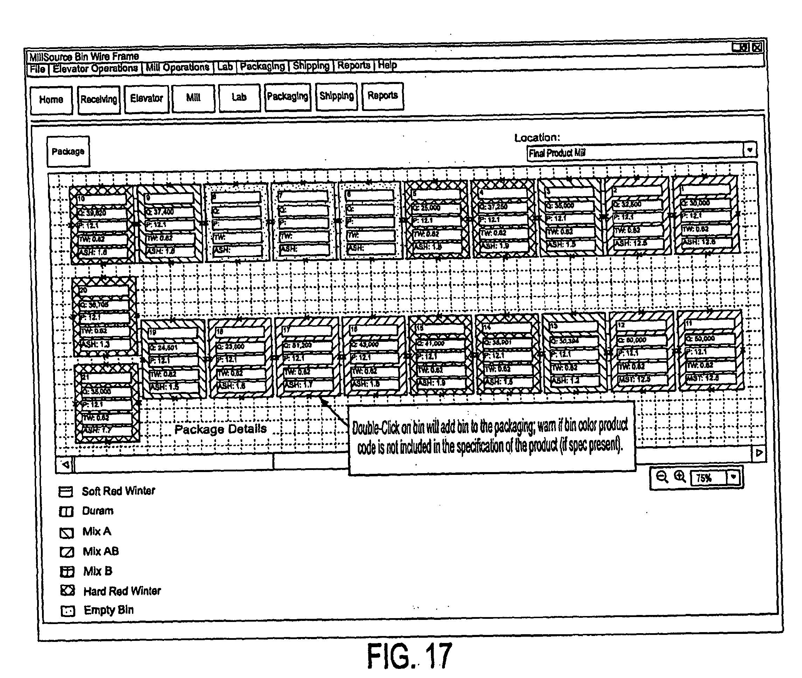

FIG. 17 is a screen that facilitates packaging of the inventory of various agricultural products at a particular location (e.g., Final Product Mill). Each storage container at the corresponding location is illustrated. Here, at the location of the Final Product Mill, the storage containers are designed 1-21, inclusive. The inventory monitor 114 may use the screen of FIG. 17 in packaging and shipping operations to deliver a desired agricultural product. In one embodiment, the desired agricultural product is selected and then the user may select the source storage container for providing the desired agricultural product to be packaged for delivery. Each storage container at a final product mill is associated with one or more of a storage container identifier, a stored product identifier, a stored quantity, a protein content (e.g., in percent), a total weight (e.g., in percent), and ash content (e.g., in percent). The identity of the agricultural product stored in a corresponding particular storage container may be indicated by the visual appearance or product identifier of a corresponding storage container. For example, each storage container that stores a certain agricultural product may have a unique color or shade to distinguish the storage container from other storage containers represented in the bin management display. Here in the illustrative example of FIG. 17, the storage containers contain one or more of the following products: Soft Red Winter wheat, Durum, Mix A, Mix B, Mix AB, and Hard Red Winter wheat.

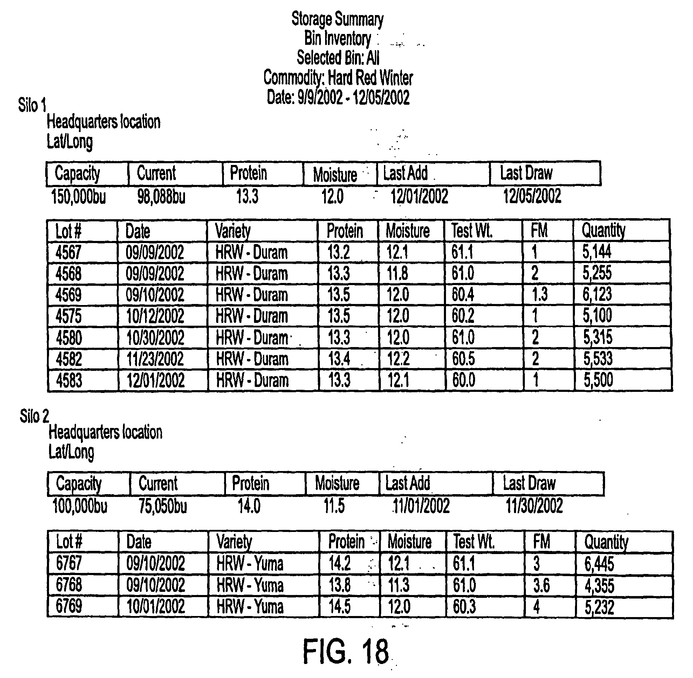

FIG. 18 represents a storage report that provides a storage summary of a various storage containers. Each storage container may be associated with its geographic coordinates (e.g., longitude and latitude) or a storage identifier for identifying a storage container. The storage container has a maximum capacity, a current capacity status, a product identifier (e.g., Hard Red Winter wheat), protein content, moisture level, last time of addition of agricultural material from the storage container, and last time of withdrawal of the agricultural material from the storage container. A storage summary chart or table is provided for a corresponding storage container (e.g., Silo 1 or Silo 2). The storage summary chart may include a column or row with one or more of the following headings: lot number, date, variety, protein, moisture, test weight, and quantity. The lot number refers to a batch or a discrete unit of product of the agricultural product. The quantity of the agricultural product may be measured by weight or volume. The protein or moisture content of the agricultural product may be measured in percent of total weight or percent of total volume of the agricultural product.

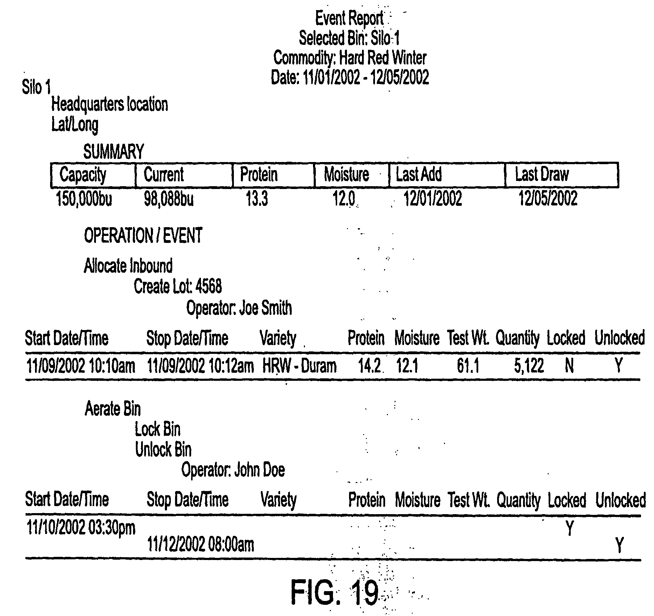

FIG. 19 represents an event report that provides an event summary of various events associated with a particular storage container. The storage container has a maximum capacity, a current capacity status, protein content, moisture level, last time of addition of agricultural material from the storage container, and last time of withdrawal of the agricultural material from the storage container. A storage summary chart or table is provided for a corresponding storage container (e.g., Silo 1 or Silo 2) and includes information on tasks performed. The storage summary chart may include a column or row with one or more of the following headings for each discrete event: event or operation description, start date, start time, stop date, stop time, variety of agricultural product, protein content, moisture content, test weight, quantity, storage container locked, storage container unlocked.

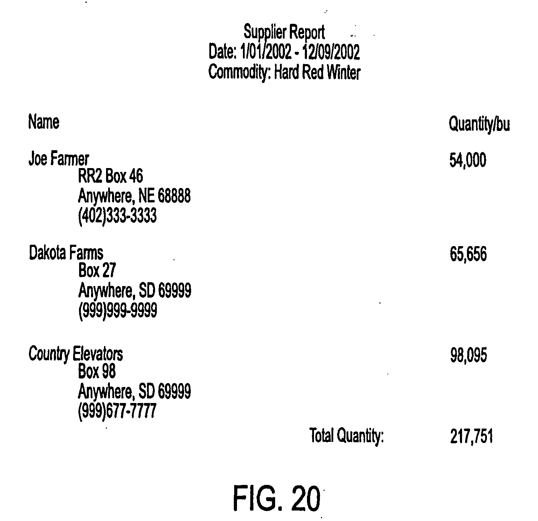

FIG. 20 represents a supplier report that provides a supplier summary of various events. A list of growers or suppliers may be displayed in ascending or descending rank of the quantity of agricultural product (e.g., in bushels) provided to a particular storage facility or group of storage facilities over a defined time period. The list of growers may include grower address, grower phone number or other contact information. In one embodiment, the user may select the defined time period, quantity ranges or query for other information.

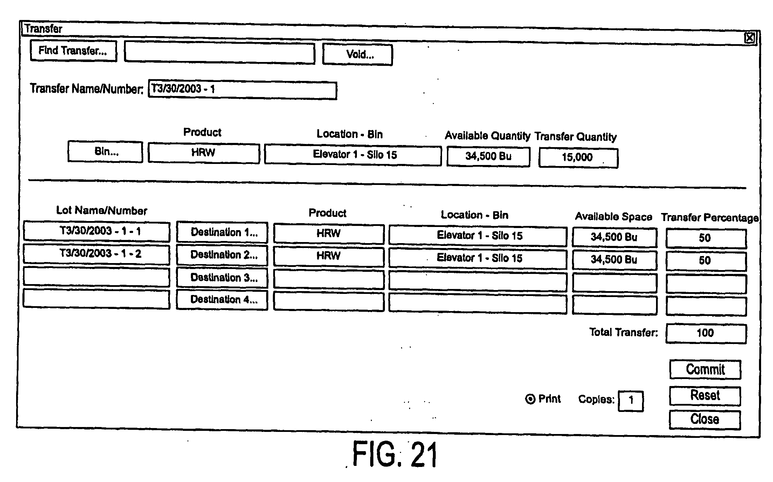

FIG. 21 is a screen that shows transferring of an agricultural product from a storage container. Each transfer may be assigned a unique transfer identifier (e.g., transfer name/number) for tracking purposes. The transfer screen supports searching of a historical transfer by key words or fields, for example. The storage container may be identified as a bin. The transfer screen may include one or more of the following transfer parameters: an agricultural product identifier, a location identifier, source storage container, destination storage container, available quantity, a transfer quantity, a lot identifier (e.g., lot name/number), available space, and transfer percentage. The transfer screen may support storing or archiving of transfers such that a user may later retrieve such transfers to determine the flow of a product through an elevator, a storage site or a processing site, for example. The tracking of the flow of an agricultural product helps assure quality and the potential ability to minimize the amount of contaminated agricultural product in the event of a product recall or contamination incident.

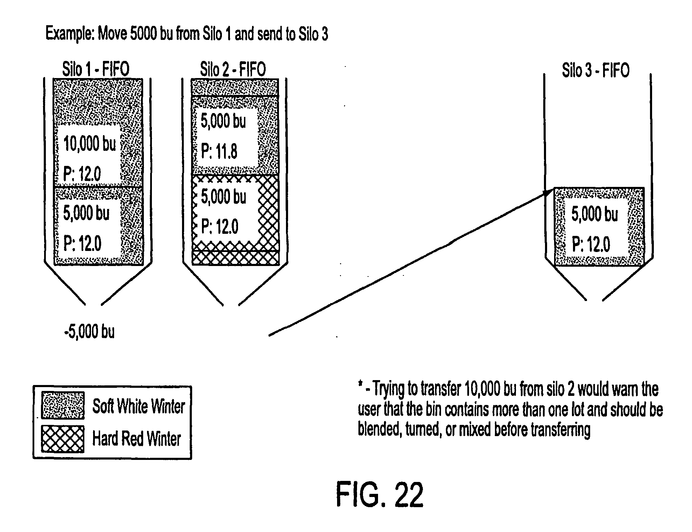

FIG. 22 illustrates transferring of an agricultural product from one source storage container to one or more destination storage containers. A transfer refers to moving of a defined quantity of a single agricultural product from one source storage container to one or more destination storage containers. For example, an operator of a storage facility may decide to move 5000 bushels of grain from a source storage container called Silo 1 to a destination storage container called Silo 3. The source storage container may be operated on a first-in, first-out (FIFO) basis with an outlet for the agricultural product at the bottom, as illustrated in FIG. 22. The emptying of agricultural product from the source storage container may be gravity-fed, fed by an auger or otherwise.

During or prior to a transfer, the data processing system 102 may provide feedback or cautionary advice or a warning to the operator in which the operator is asked to confirm or take other appropriate actions from a menu. For example, if the operator enters a request to transfer an agricultural product in a source storage container that contains more than one lot or different varieties of an agricultural product, or different agricultural products, the data processing system 102 may warn the operator that the source storage container contains more than one lot and should be blended, turned, and mixed before transferring.

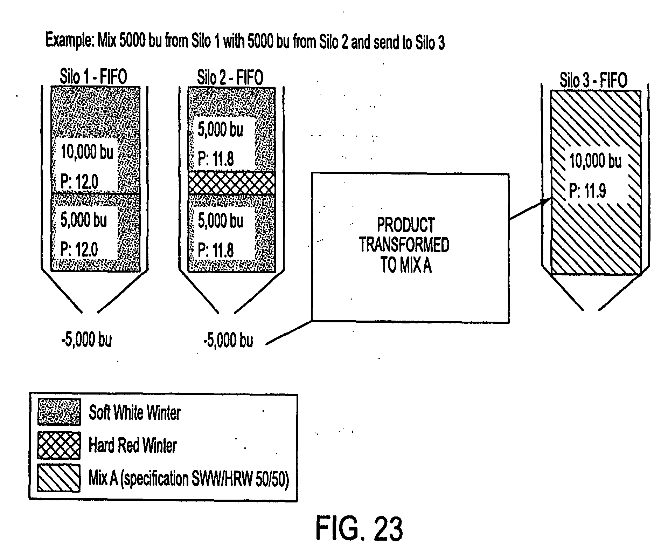

FIG. 23 illustrates mixing an agricultural product from two or more source locations to a destination storage container. Mixing refers to combining a quantity from two or more non-identical agricultural products to achieve target trait values or a new product composition. For example, an operator may mix 5,000 bushels of a first agricultural product (e.g., Soft White Winter wheat) from Silo 1 with 5,000 bushels of a second agricultural product (e.g., Hard Red Winter wheat), distinct from the first agricultural product, from Silo 2. The first agricultural product and the second agricultural product are transferred to Silo 3 and mixed to form the resultant agricultural product (e.g., Mix A, composed of 50% by volume of Soft White Winter Wheat and 50% by volume of Hard Red Winter wheat). Here, in the illustrative example of FIG. 23, the resultant agricultural product is a different composition in two respects. First, the product attribute of protein content is an average or intermediate value between the protein value of the respective source agricultural products from Silo 1 and Silo 2. Second, the mix in Silo 3 is a blend or mix of soft white winter and hard red winter wheat. Although the first agricultural product comprises soft white winter wheat and the second agricultural product comprises hard red winter wheat and the mix represents a 50 percent by volume aggregate mixture, any combination of two or more agricultural products in any proportion by weight or volume may fall within the scope of the invention.

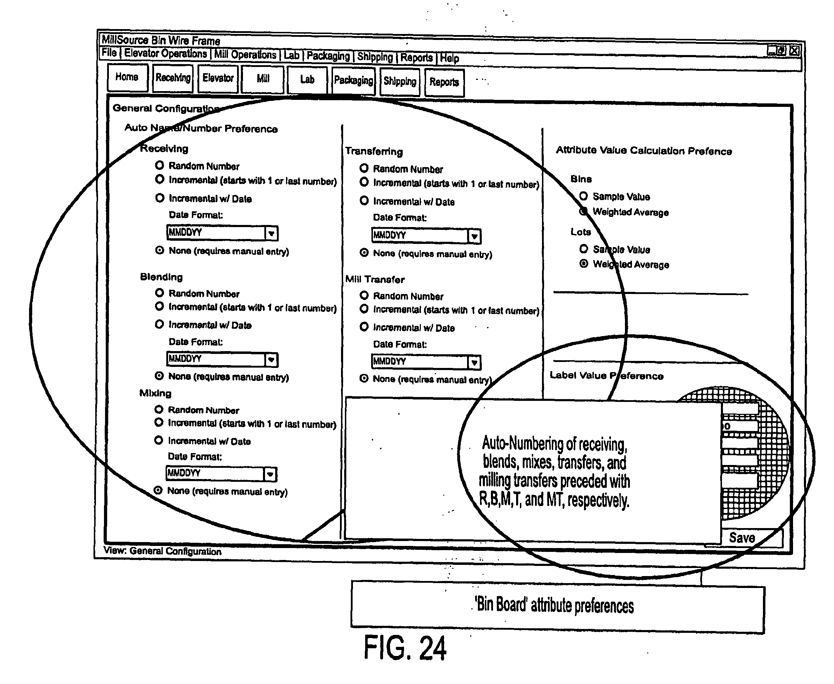

FIG. 24 illustrates data tracking for receiving, blending, mixing, transferring of agricultural products or other operations. The screen of FIG. 24 supports assignment of unique identifiers to receipts, blends, mixes, transfers, milling transfers or other operations. Although the operator may select from various alternate schemes for identification of corresponding agricultural products as shown in FIG. 24, other configurations are possible in which the operator is not given a choice as to how the identification is assigned to corresponding agricultural products, blends, mixes, transfers, and mill transfer. For example, the assigned identifications may be assigned based on one or more of the following: a random number, an incremental number, incremental number with date or manual entry by an operator.

The attribute values of bins and lots may be determined in accordance with various user definable preferences. Under one technique, the user may apply sample values to a particular storage container, a weighted average to a particular storage container. Under another technique, the user may apply sample values or weighted averages to a particular lot within one or more storage containers. The attribute values of the bins and lots may be expressed in a graphical or numerical form in a report, a graphical bin display, or both.

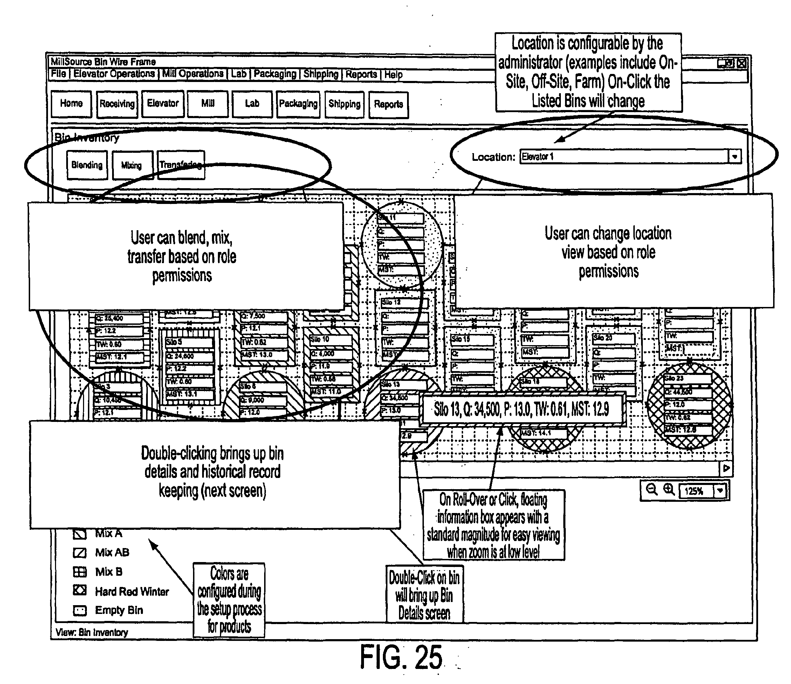

FIG. 25 is a graphical bin representation that allows a user to blend, mix or transfer between storage containers to transfer the agricultural product from the storage container or to transfer the agricultural product to the storage container. A user may select a storage location which includes multiple storage containers as represented by the circular and rectangular objects of FIG. 25 within the graphical bin representation. If a user selects a particular storage container, the user may retrieve or bring up details and historical records associated with the storage container. A user can blend, mix, and transfer based on the role permissions associated with a particular user. The graphical bin representation is updated regularly or upon the occurrence of an event authorized by a user. An event may include a reception, delivery, transmission, transfer, blend, mix or other processing of an agricultural product within one or more containers.

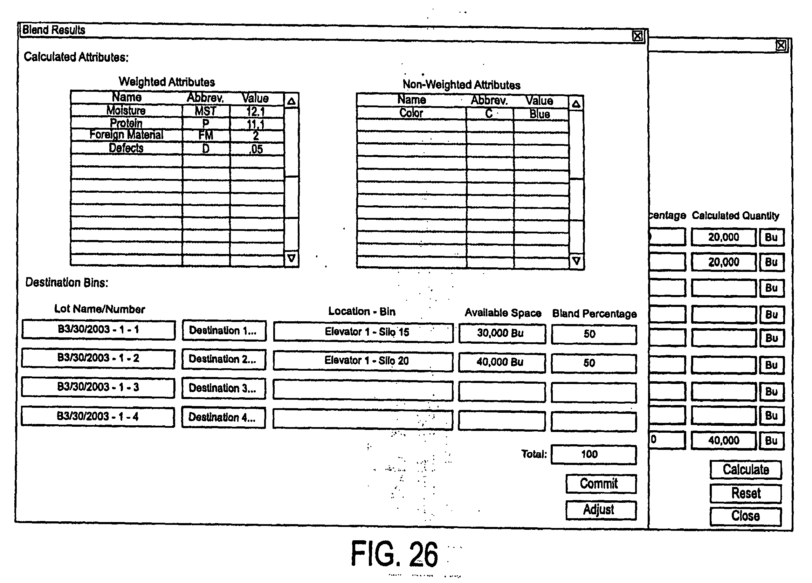

FIG. 26 is a blending calculator that determines the relative quantities, weights or volumes of two or more agricultural products to be blended upon input of input data. The input data may include the lot identifier (e.g., lot name/number), source storage container, destination storage container, location, available space, and blend percentage for each agricultural product to be blended or mixed together. The blending calculator may output data based on the input data. In the illustrative example of FIG. 25, the location is Elevator 1 and the destination storage containers are Silo 15 and Silo 20. The output data may represent weighted attributes of the agricultural product or a derivative thereof, non-weighted attributes of the agricultural product or a derivative thereof or other aspects. For example, the weighted attributes may include moisture level, protein content, foreign material, and defects. The weighted attributes may be expresses as a percentage by volume, a volumetric ratio, a percentage by weight or a weight-based ratio. The non-weighted attributes may include such attributes as color or appearance. The user may adjust the input data until the output data achieves the desired result. If and when the output data achieves the desired result per the blending calculator, the user may activate the commit button or a similar command to begin the appropriate dialogue for execution of the blending.

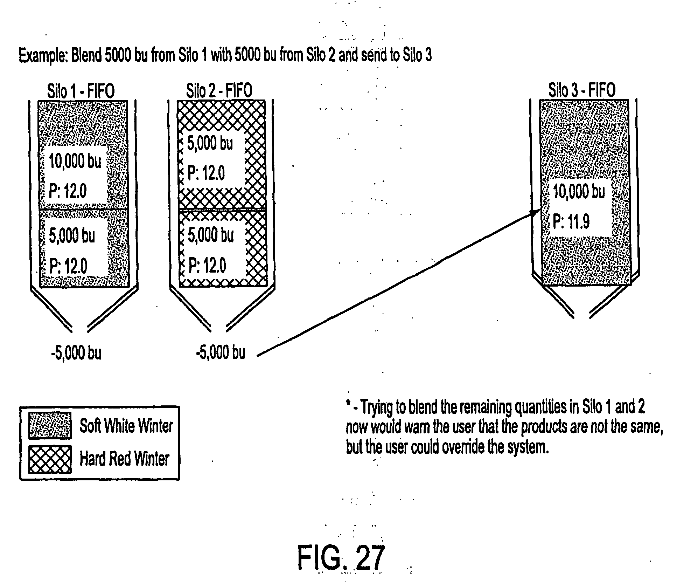

FIG. 27 illustrates blending two or more precursor agricultural products together to achieve a target trait value of a derivative agricultural product. Blending means combining a quantity from two or more substantially identical or substantially similar products together to achieve target trait values. For example, a user may blend 5,000 bushels of a primary agricultural product (e.g., Soft White Winter wheat) from Silo 1 with 5,000 bushels of a secondary agricultural product (e.g., Hard Red Winter wheat) from Silo 2, where the primary agricultural product and the secondary agricultural product represent substantially identical or substantially similar agricultural products. Here, the agricultural products in Silo 1 and Silo 2 are not substantially similar because Silo 1 contains Soft White Winter wheat and Silo 2 contains Hard Red Winter wheat. Accordingly, the user may be warned that trying to blend the quantities of agricultural products in Silo 1 and Silo 2 would not result in a blend because the products are different. In one embodiment, the user might be given the option to override the data processing system 102 to execute a "blend" between dissimilar agricultural products or where the actual agricultural product in the storage container is not aligned with the supposed or erroneous contents set forth in the data processing system 102.

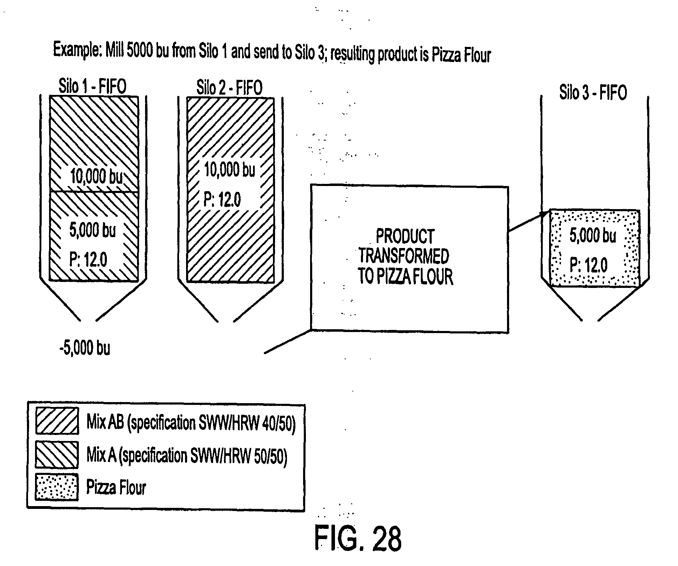

FIG. 28 illustrates a milling transfer in which an agricultural product changes state from a raw material to a milled material. Milling refers to transferring a quantity of a source agricultural product from one or more source storage containers to one or more destination storage containers, accompanied by a change of state during the transfer to account for the milling process. For example, 5,000 bushels of a source agricultural product (e.g., grain) are transferred from Silo 1, milled, and then sent to Silo 3 as a destination agricultural product (e.g., flour) that is changed in state. As illustrated, the source agricultural product represents Mix A, but in practice, any source agricultural product may be used. The change in state from the source agricultural product to the destination agricultural product may be referred to as a product transformation.

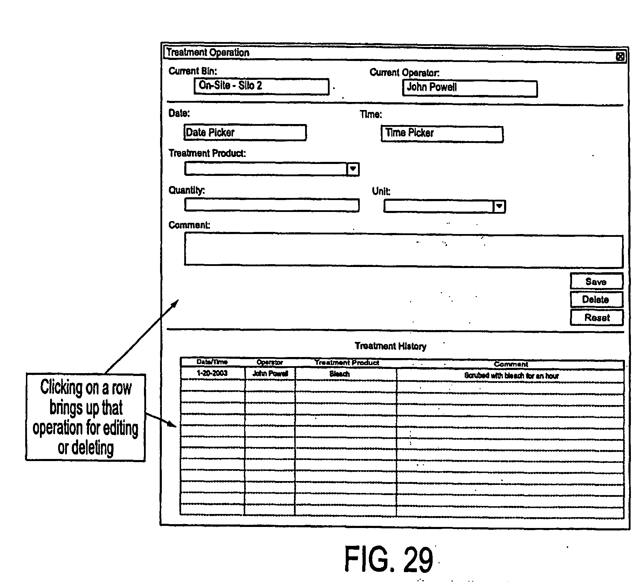

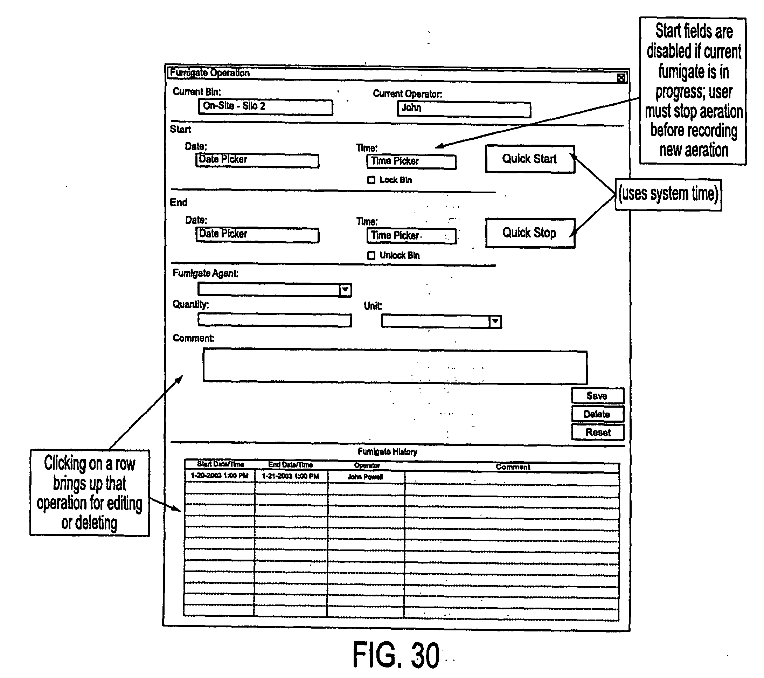

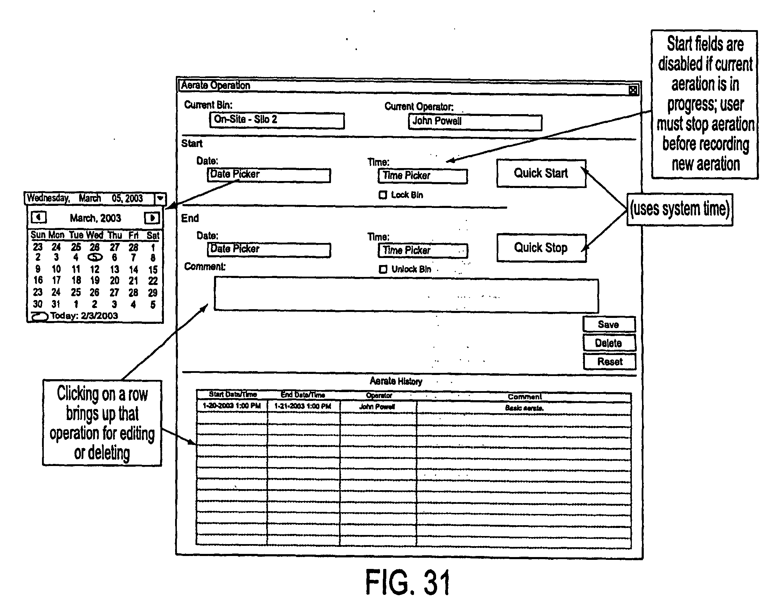

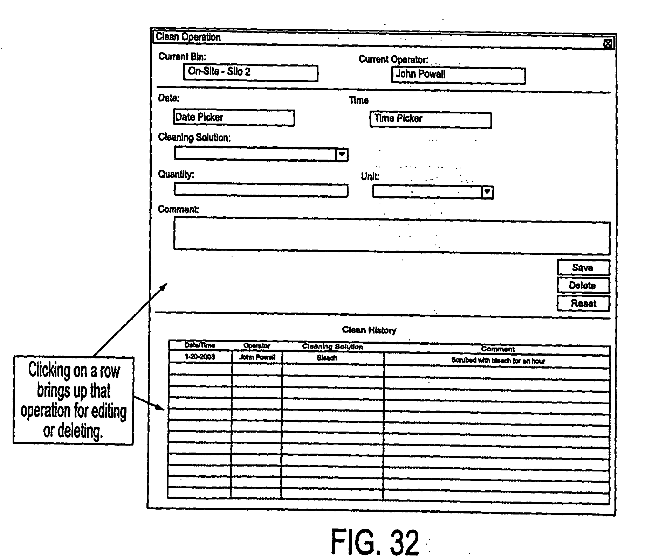

FIG. 29 through FIG. 32 show various screens for tracking treatments of an agricultural product. FIG. 29 illustrates a screen for tracking treatment of the agricultural product. FIG. 30 illustrates a screen for tracking fumigation of the agricultural product. FIG. 31 illustrates a screen for tracking aeration of an agricultural product. FIG. 32 illustrates a screen for tracking cleaning of an agricultural product.

FIG. 29 supports an operator's entry of treatment data of a treatment operation of a current storage container. The treatment data may include one or more of the following: a current operator, a date, a time, a treatment product identifier, a quantity of the treatment product, and any textual, audio or audiovisual comments or annotations.

FIG. 30 supports an operator's entry of a fumigation operation of a current storage container. The fumigation operation may include one or more of the following: current operator, a start date, a start time, a bin lock designator, an end date, an end time, a fumigant agent identifier, a quantity, dosage, exposure or rate of application of the fumigant identifier, and any textual, audio or audiovisual comments or annotations.

FIG. 31 supports an operator's entry of aeration data of a treatment operation. The aeration data may include one or more of the following: current operator, a start date, a start time, a bin lock designator, an end date, an end time, an aeration exposure duration, and any textual, audio or audiovisual comments or annotations.

FIG. 32 supports an operator's entry of clean data of cleaning operation. The cleaning data may include one or more of the following: current bin, current operator, date, time, cleaning solution identifier, quantity, and comment.

The system and method supports management of agricultural products for tracking the materials of the agricultural product across any transformation from a raw material to a processed material. The system supports operation in a network mode in which participants communicate over a communications network link in a store and forward mode. Communications may take place on a regular basis consistent with various communications rules. For example, in a store and forward mode, participants communicate only a change in the data at their location or at regular intervals, rather than maintaining continuous communication.

The system and method of the invention support the management of storage containers housing raw materials (e.g., wheat, grain, corn or soybeans), intermediate processed materials (e.g., malted barley, crushed soybeans or crude oil) and processed ingredients (e.g., wheat flour or refined oil). The system and method facilitates tracing of an agricultural product or identity preservation through one or more of the following: a supply chain, processing, manufacturing, distribution, retail, operations management, and other transactions or transformations of the agricultural product. The system and method is well suited for application to mill operations, including tracking of storage and blending information on operations within a mill. The system and method has general application to tracing the storage, inventory, and logistics associated with agricultural products stored in one or more storage containers, at one or more locations, and at one or more facilities to achieve coordination.

The system and method of the invention facilitates reduced time and cost of producing blended agricultural products or other agricultural products or derivatives thereof that meet defined specifications. The defined specifications may be defined by customer requirements, specifications imposed regulatory requirements, specifications imposed by the processor or manufacturer or otherwise. The system and method enables inventory to be managed at the lot-level as the inventory of the agricultural product, derivatives or precursors thereto move through the production process. Inventory reduction can lead to improved financial performance of mills and just-in-time operations, for example. Automated calculation of blending proportions or different agricultural products, to achieve desired output results of the blended agricultural product, may improve the temporal efficiency of blending operations and increase the coordination of the agricultural product (e.g., grain) through a mill or other processing plant.

Having described the preferred embodiment, it will become apparent that various modifications can be made without departing from the scope of the invention as defined in the accompanying claims.

## Claims

1. A method for managing the processing of an agricultural product, the method comprising:
storing a raw material in a storage container;
physically processing the stored raw material in the storage container to obtain a processed material based on the raw material;
recording link data for associating the raw material with the processed material across any transformation between of the raw material and the processed material; and
providing a graphical user interface to facilitate at least one of entry, storage, retrieval, and data processing of the recorded link data for management of at least one of the raw material, the processed material, and at least one storage container.

2. The method according to claim 1 wherein the processing comprises blending the stored raw material with another material to obtain a target trait value of the blended, processed material.

3. The method according to claim 1 wherein the processing comprises blending multiple stored raw materials together in defined proportional quantities to form the processed material.

4. The method according to claim 1 wherein the processing comprises coordinating movements of raw material, processed material, and any derivatives of raw material and processed material among storage containers.

5. The method according to claim 1 wherein the storage container is associated with a storage identifier, each raw material associated with the storage identifier having material attributes, the material attributes including one or more of the following: quantity of stored material, protein content, total weight, moisture, foreign matter, defects, color, material identifier, material variety identifier, blend identifier, and mixture identifier.

6. The method according to claim 1 wherein the providing comprises providing a graphical representation of a storage site associated with the at least one storage container.

7. The method according to claim 1 wherein providing comprises providing a graphical representation of a top view of a storage site associated with the at least one storage container, each storage container have an associated storage identifier, each storage container associated with a status indicator, a content indicator, or both.

8. The method according to claim 1 wherein the at least one storage container and associated information on any material therein is assessable to a defined access list of user identifiers.

9. The method according to claim 1 wherein providing comprises providing a user with a software drawing tool to form a map, schematic representation or other diagram of a storage site and various storage containers at the storage site.

10. The method according to claim 1 wherein the processing step supports automatically naming receptions, blends, mixes, and transfers of any material to or from the storage container.

11. A method for managing processing of an agricultural product, the method comprising:
receiving a raw material in a storage container;
processing the stored raw material in the storage container to obtain a processed material based on the raw material;
recording link data for associating the raw material with the processed material across any transformation between the raw material and the processed material; and
providing a graphical user interface to facilitate at least one of entry, storage, retrieval, and data processing of the recorded link data for management of the storage containers.

12. The method according to claim 11 further comprising the step of:
shipping the processed material from the storage container to a destination location.

13. The method according to claim 11 wherein the processing comprises combining the raw material with one or more agricultural products, each agricultural product associated with an attribute value to impact a resultant attribute value of the processed material.

14. The method according to claim 11 wherein the processing comprises combining the raw material with one or more agricultural products, each agricultural product associated with a protein content, a moisture content, a damage parameter, and a foreign material parameter, such that the processed material complies with at least one of a target protein content, a target moisture content, a target damage parameter, and a target foreign material parameter.

15. The method according to claim 11 wherein the graphical user interface provides a graphical representation of one or more storage containers located at a location, each storage container associated with a content identifier for identifying contents of the respective storage container, a quantity for indicating the quantity of the contents of the respective storage container, and at least one attribute value of the respective contents of the storage container.

16. The method according to claim 15 wherein the content identifier provides a visual indication of an identity of the contents of a corresponding storage container.

17. The method according to claim 11 wherein the graphical user interface provides a graphical representation of one or more storage containers located at a location, each storage container associated with a content identifier for identifying contents of the respective storage container, a quantity for indicating the quantity of the contents of the respective storage container, a protein content of the respective contents of the storage container, a moisture content of the respective contents of the storage container, damage indicator of the respective contents of the storage container, foreign material content of the respective contents of the storage container, and the total weight of the contents of the storage container.

18. The method according to claim 11 further comprising keeping an event history for a corresponding storage container, the event history comprising an operation, a temporal indicator, operator identifier, and comments.

19. The method according to claim 11 further comprising keeping an event history for a corresponding storage container, the event history containing an operation selected from the group consisting of aeration of at least one of the materials, inbound receipt of at least one of the materials, outbound shipment of at least one of the materials, rotating contents of the storage container, and cleaning the storage container.

20. The method according to claim 11 wherein the processing comprises combining the raw material with a first attribute value with another material with a second attribute value to obtain a processed material with a resultant attribute value that has an intermediate value between the first attribute value and the second attribute value.

21. The method according to claim 20 wherein the attribute value is selected from the group consisting of a protein content, moisture content, damage parameter, and a foreign material content.

22. The method according to claim 11 wherein the processing comprises milling grain as the raw material and wherein the processed material comprises flour.

23. The method according to claim 11 wherein the processing comprises combining a raw material as the grain with one or more additional constituent materials to obtain flour with a desired target attribute value as the processed material.

24. A system for managing the processing of an agricultural product, the system comprising:
a transaction manager for storing data on physically processing stored raw material in a storage container to obtain a processed material based on the raw material;
a data storage manager for recording link data for associating the raw material with the processed material across any transformation between the raw material and the processed material; and
a graphical user interface to facilitate at least one of entry, storage, retrieval, and data processing of the recorded link data for management of at least one of the materials and the storage container.

25. The system according to claim 24 further comprising a definer for defining a graphical bin representation that represents one or more storage containers and contents thereof, the contents of each storage container being associated with corresponding attribute values.

26. The system according to claim 24 wherein the transaction manager further comprises a receiving module for supporting an inbound receipt of an agricultural product for one or more storage containers, a processing module for monitoring the processing of the agricultural product and any transfers between storage containers, and a shipping module for supporting an outbound shipment of the agricultural product.

27. The system according to claim 24 wherein the graphical user interface provides screens for defining a storage system for receiving, storing, processing, shipping an agricultural product, and managing an inventory of the agricultural product.

28. The system according to claim 24 further comprising:
a data processing system for supporting the transaction manager and the data storage manager;
a first remote station comprising a quantity detector for detecting a first quantity of a first agricultural product stored in a corresponding first storage container and an attribute measurer for measuring an attribute of the first agricultural product;
a second remote station comprising a quantity detector for detecting a second quantity of a second agricultural product stored in a corresponding second storage container and an attribute measurer for measuring an attribute of the second agricultural product; and
a central station for receiving at least one of the first quantity, the second quantity, the first attribute, the second attribute, and the central station in communication with the data processing system.
